(19) Europäisches Patentamt / European Patent Office / Office européen des brevets

(11) **EP 3 101 448 A1**

(12) **EUROPEAN PATENT APPLICATION**

(43) Date of publication:
**07.12.2016 Bulletin 2016/49**

(51) Int Cl.:
**G01T 1/20** (2006.01)

(21) Application number: **15170205.7**

(22) Date of filing: **02.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Paul Scherrer Institut**
**5232 Villigen (CH)**

(72) Inventors:
• **Stampanoni, Marco**
**5304 Endingen (CH)**
• **Alekhin, Mikhail**
**5200 Brugg (CH)**

(74) Representative: **Fischer, Michael**
**Siemens AG**
**Postfach 22 16 34**
**80506 München (DE)**

(54) **STIMULATED SCINTILLATION EMISSION DEPLETION (SSED) FOR HIGH-RESOLUTION QUANTITATIVE X-RAY NANOIMAGING**

(57)    The present invention suggests a new method for generating high spatial resolution X-ray images of an object. Differently than other existing X-ray imaging set-ups, our configuration employs stimulated scintillation emission depletion and improves the spatial resolution beyond the diffraction limit of conventional scintillation emission.

In our new method, X-rays (2) passing through an object (3) are partially absorbed by a luminescence screen (5). The emission of the luminescence screen (5) generates an image of the object (3). A de-excitation light (8) comprising zero-intensity point in at least one focal area is applied to the luminescence screen (5). This light de-excites the excited luminescence centers leaving sub-diffraction sized spots of the spontaneously emitted scintillation. The image of the object (3) in the luminescence screen (5) is scanned, and a two-dimensional X-ray image of one projection is reconstructed. By measuring different two-dimensional projections, a three-dimensional image of the object (3) is reconstructed.

FIG 4

EP 3 101 448 A1

**Description**

The present invention relates to a method and a device for high resolution quantitative X-ray nanoimaging using stimulated scintillation emission depletion (SSED).

X-ray microtomography is a non-destructive technique for the three-dimensional (3D) imaging of the internal structure of an object with micrometer spatial resolution. The 3D image is reconstructed from a set of cross-sectional two-dimensional (2D) X-ray images of the object taken under different view angles.

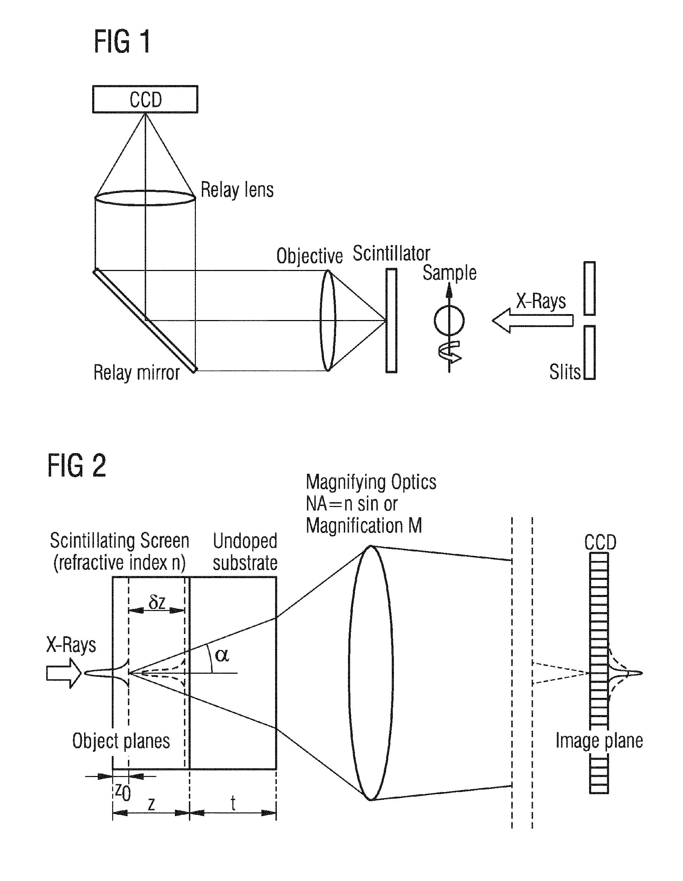

A conventional setup for absorption contrast X-ray imaging is shown in Fig. 1 [1]. The X-ray beam passing through the sample is partially absorbed by the luminescent screen, where it generates a visible light image of the sample. This image in then coupled with a magnification optics to the CCD detector. The spatial resolution of this system is limited by several factors.

One is the defect of focus. Incident X-rays create identical images of the sample in different luminescence screen planes (Fig. 2). The final CCD image is formed by a superposition of intensity distributions of those planes. The contribution from the defect of focus to the spatial resolution can be written as [1]:

$$R \sim \delta z \mathrm{NA} \qquad (1)$$

where NA - numerical aperture of the optical system, $\delta z$ - the defect of focus (Fig. 2).

A more fundamental spatial resolution limit is the diffraction barrier of the scintillation emission. The spatial resolution due to the diffraction barrier is given by:

$$R \sim \lambda / 2 \mathrm{NA} \qquad (2)$$

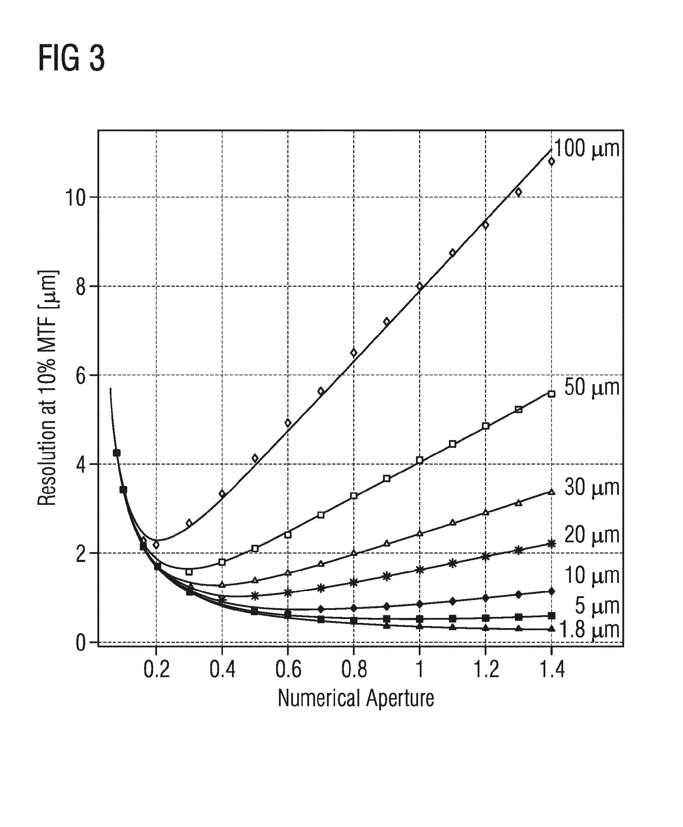

where $\lambda$ - is the wavelength of the scintillation emission. Fig. 3 shows the spatial resolution simulated for different scintillator thicknesses and objectives numerical apertures [2]. For all the objective numerical apertures, the resolution is limited by the diffraction barrier. For high NA, the resolution also strongly depends on the scintillator thickness. One can minimize the contribution of the defect of focus by using < 1 $\mu$m thick luminescence screens. Such thin plates, however, cannot be cut and polished from single crystals, but have to be grown with e.g. deposition methods. The latter makes the production more complicated, and not all deposition-grown luminescence screens are as efficient as their single-crystal analogues. The best spatial resolution reported was 0.5 $\mu$m, achieved with 1 $\mu$m $Lu_3Al_5O_{12}$:Eu luminescence screen [3]. This value is very close to the diffraction limit.

Another spatial resolution limit is a finite-volume X-ray energy deposition in the luminescence screen. To determine its influence on the spatial resolution, Monte-Carlo simulations of photon and electron transport in 5 $\mu$m thick $Y_3Al_5O_{12}$:Ce scintillator were performed for a pencil X-ray beam of 5 to 100 keV energies [1]. A very high relative absorbed dose was observed in the central cylindrical region around the pencil X-ray beam. The high-spatial-frequency response of the detector was estimated to be smaller than 100 nm, which is far beyond the diffraction limit of the scintillation emission.

In fluorescence optical microscopy, the diffraction barrier was overcome with stimulated emission depletion (STED) techniques, which was proposed and developed by S. Hell [4, 5]. The main idea was to confine fluorescence areas to sub-diffraction sized spots by applying additional depletion light beam. The wavelength of this light was chosen such that it induces stimulated emission of the excited molecules, thereby de-exciting them to the ground states, and making their spontaneous fluorescence improbable. If the excitation area was overlapped with the depletion area featuring a zero-intensity spot, only the spontaneous emission from this very small spot was observed.

It is therefore the objective of the present invention to provide an X-ray nanoimaging device and a method that has a high spatial resolution equal or close to the diffraction limits.

This objective is achieved according to the present invention by an X-ray nanoimaging device that applies stimulated scintillation emission depletion techniques in the X-ray imaging regime, to overcome the scintillation emission diffraction barrier. In addition, the defect of focus contribution is minimized, avoiding the need of submicron luminescence screens, by using commercially available thick luminescence screens.

In particular, this objective is achieved according to the present invention by an apparatus for high-resolution X-ray imaging, comprising:

a) an X-ray source (1) being enabled to emit X-rays (2) through a probe (3);
b) a module (5) to convert X-rays into light, preferably a luminescence screen (5);
c) a light source (8), preferably a laser, to perform stimulated scintillation emission depletion on the module (5) by emitting de-excitation light (10); and
d) a detector (15) to register spontaneous scintillation emission in the module (5).

Further, this objective is achieved according to the present invention by a method for high resolution X-ray imaging, comprising the steps of:

a) converting X-rays passing through a sample into light;
b) applying de-excitation light (10) to a X-ray into light converter (5), preferably to a luminescence screen (5), which de-excites excited luminescence centers and which comprises a zero-intensity point in at least one focal area;

c) detecting spontaneous scintillation emission from the excited luminescent centers; thereby allowing the repetition of steps a) to c) at different positions of the focal area of the de-excitation light relative to the sample image in the X-ray into light converter (5), such as the luminescence screen (5); and
d) reconstructing two-dimensional images of one X-ray projection of the sample.

Preferred embodiment of the present invention with respect to the device and/or the method can be achieved by one or more of the following features:

a) the de-excitation light (10) causes stimulated emission depletion of the excited luminescence centers in the X-ray to light converter (5);

b) the de-excitation light (10) causes stimulated emission depletion based on 5d-4f transitions of rare-earth luminescence centers;

c) the de-excitation light (10) causes stimulated emission depletion based on 4f-4f transitions of rare-earth luminescence centers;

d) de-excitation light (10) causes stimulated emission depletion of alkali metal, transition metal, or post-transition metal luminescence centers;

e) the de-excitation light (10) causes excited state absorption of the luminescence centers;

f) the X-ray source (1) is pulsed or continuous wave;

g) the de-excitation light source (8) is pulsed or continuous wave;

h) the detector (15) is a single-pixel detector or a multi-pixel detector;

i) a confocal pinhole (14) is comprised before the detector (15);

j) an X-ray pinhole (4) is comprised before the X-ray to light converter (5);

k) the X-ray source (1) is a synchrotron or an X-ray tube (hot or cold), or a compact light source; and/or

l) the device and the method allowing to measure multiple two-dimensional projections of the sample (3) at different angles and to reconstruct three-dimensional images from 2D images.

Preferred embodiments of the present invention are hereinafter described with more detail with respect to the attached drawings which depict in:

Figure 1    a schematic diagram of the X-ray imaging setup [2] according to the prior art;

Figure 2    identical visible-light images which are created by incident X-rays in different planes of the scintillator [2]. Plane z0 is in the focus of optical system. Plane z0+$\delta$z is out-of-focus of the CCD;

Figure 3    a numerical simulation of the spatial resolution, expressed in $\mu$m at 10% modulation transfer function (MTF) [2];

Figure 4    a schematic representation of SSED X-ray nanoimaging setup according to the present invention; the drawing components are not necessarily to scale; and

Figure 5    a schematic representations of a) an electron energy level diagram and de-excitation mechanisms in Ce3+ scintillator, b) a Ce3+ emission spectra.

## Definitions

To avoid any ambiguity, the luminescence screen is defined as a material that emits light when excited by an ionizing radiation. Luminescence screens cover both, scintillator materials with fast nanosecond to microsecond emission decay time, and phosphor materials with slower decay time in millisecond range. Luminescence screens emit in a broad range of wavelengths, from ultra-violet to near-infrared. The luminescence screens emitting visible light are the most common.

A luminescence center is an atom/ion or a group of atoms/ions, where an electron and a hole recombine, followed by the emission of a photon. The examples of the luminescence centers and their emission transitions are (the list is not exhaustive):

- Fast 5d-4f transitions in rare-earth ions, e.g. $Ce^{3+}$, $Pr^{3+}$, $Eu^{2+}$
- Slow 4f-4f transitions in rare-earth ions, e.g. $Tb^{3+}$, $Eu^{3+}$
- Transition and post-transition metal ions, e.g. $Ti^+$, $Tl^+$, $Pb^{2+}$, $Bi^{3+}$
- Self-activated materials, e.g. $Bi_4Ge_3O_{12}$ or $CaWO_4$

A stimulated scintillation emission depletion (SSED) X-ray imaging device and method are presented, whereby the spatial resolution of the X-ray image is improved to values below the diffraction limit of the scintillation emission. The device and the method comprise the following:

1) An object under investigation is irradiated with X-rays. The X-rays transmitted through the object are partially absorbed by a luminescence screen, where they are converted into optical photons.

2) De-excitation light with at least one zero-intensity area in the focal plane is applied to the luminescence screen. This light causes either stimulated scintillation emission depletion or excited state absorption of the excited luminescence centers making the spontaneous emission improbable.

3) The spontaneous scintillation emission from the sub-diffraction sized zero-intensity spots is registered.

4) The positions of the zero-intensities of the de-excitation light are shifted relative to the sample image in the luminescence screen, and the steps 1 to 3 are repeated.

Steps 1 to 3 can be consecutive as well as simultaneous.

## Detailed description

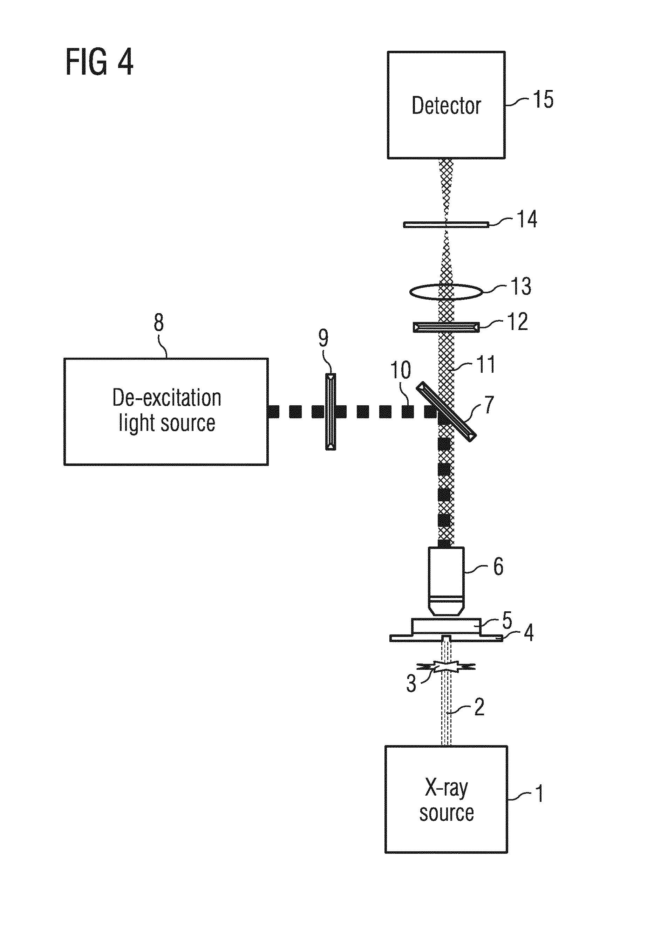

Fig. 4 shows an SSED X-ray nanoimaging device according to the present invention. X-rays 2 from an X-ray source 1, passing through a sample 3, are partially absorbed by a luminescence screen 5. A de-excitation light source 8 generates de-excitation light 10. With a dichroic mirror or a beam-splitter 7, the light is directed towards a microscope objective 6, whereby it is focused on the luminescence screen 5. An optical element or a combination of optical elements 9 alters the de-excitation beam wave front, creating at least one zero-intensity point at precisely defined position in the focal plane of the microscope objective 6. This light de-excites the excited luminescence centers except those located within narrow-sized areas around the zero-points. Spontaneously emitted from these areas scintillation light 11 is collimated by the same objective, and registered by a detector 15. An optical filter 12 can be inserted in the beam path to block scattered de-excitation light.

In one configuration, the optical element 9 creates only one zero-intensity spot in the focal plane of the microscope objective 6. An additional confocal pinhole 14 can be then placed in front of the detector 15 to block out-of-focus scintillation light. In this case, a single-pixel photon detector can be employed for fast photon registration. Because out-of-focus light is blocked, the thickness of the luminescence screen is not limited to submicron values, and various commercially available screens can be used.

In another configuration, the optical element 9 creates multiple zero-intensity spots in the focal plane of the microscope objective 6. A multi-pixel photon detector can be then employed to register the spontaneous scintillation signal from multiple sub-diffraction spots in parallel.

An additional X-ray pinhole 4 transmitting the X-rays 2 only within a narrow-sized area around the optical axis of the microscope objective 6 can be placed in front of the luminescence screen. The first advantage is the minimization of the out-of-focus scintillation emission. The second advantage is the minimization of possible damages caused to the microscope objective 6 by the X-rays 2 which are not absorbed by the luminescence screen 5.

Main requirements for the luminescence screen 5 are high X-ray conversion efficiency and high electron stopping power. This implies high density, high effective atomic number, and high light output of the scintillation material. In addition, one should be able to efficiently de-excite its excited luminescence centers by the external de-exitation light source 8.

## De-excitation mechanisms

Two de-excitation mechanisms are proposed in luminescence screens: stimulated scintillation emission depletion (SSED) and excited state absorption (ESA). For SSED, one can employ, for example, emission transitions of rare-earth, transition metal, or post-transition metal ions.

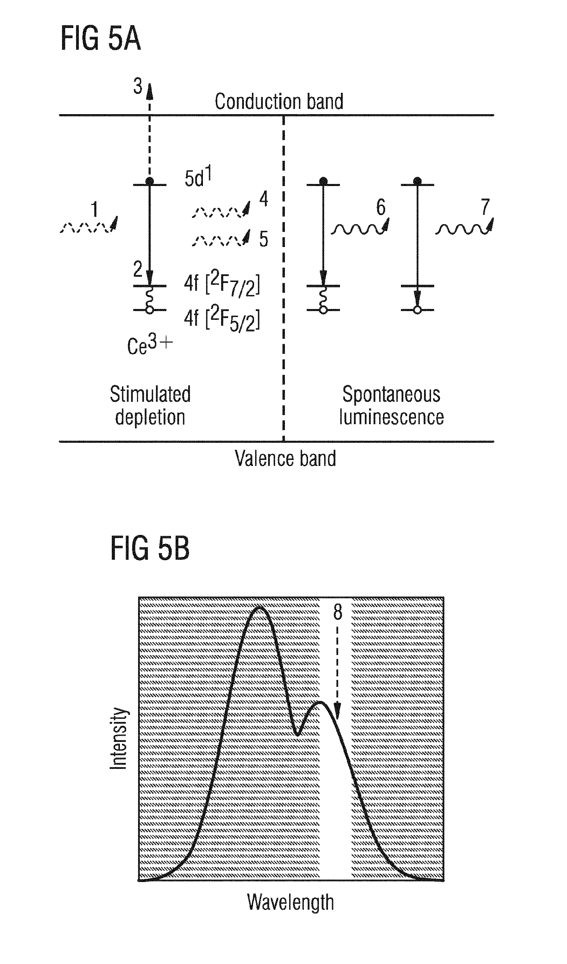

In Fig. 5, it is illustrated how a 5d-4f emission transition of $Ce^{3+}$ can be employed. As a result of an interaction of a luminescence screen with an X-ray, some $Ce^{3+}$ ions change to the excited state with a hole on the 4f level and an electron on the $5d^1$ level. Incoming de-excitation photon (arrow 1) can cause either stimulated emission resulting in de-excitation of the $5d^1$ electron to one of the 4f levels (arrow 2) and emission of two photons (arrows 4, 5), or ESA, exciting the $5d^1$ electron into the conduction band (arrow 3). Fig. 5(b) schematically shows a characteristic emission spectrum of $Ce^{3+}$ with an arbitrary chosen de-excitation light wavelength (arrow 8). The optical filter (12, Fig. 4) blocks the de-excitation light, whereas the remaining part the scintillation emission (hatched area, Fig. 5(b)) is registered by the detector (15, Fig. 4). For efficient SSED, the depletion light wavelength is chosen so that:

1. The stimulated emission cross-section is maximal
2. The excitation of ground state $Ce^{3+}$ ions is avoided
3. The amount of $Ce^{3+}$ emission collected in maximal
4. The high-power de-excitation light sources (8) are available
5. The suitable optical filters (12) are available

Various 4f-4f and 5d-4f emission transitions of various rare-earth elements can be employed for SSED. The SSED mechanisms, when one type of the transition (e.g. 4f-4f) is used as a depletion, and another (e.g. 5d-4f) for the scintillation emission detection, are also possible.

The role of the ESA in the de-excitation mechanisms can be double-sided. Depending on the luminescence screen material, the de-excitation light source, and the de-excitation mechanism, ESA can be an intermediary in the de-excitation process as well as harmful obstacle reducing SSED efficiency.

**Requirements for the X-ray and the de-excitation light sources**

Both, the X-ray source 1 and the de-excitation light source 8 can be continuous wave (cw) or pulsed. cw X-ray sources are preferred to pulsed X-ray sources, because they produce higher (integrated over time) X-ray fluxes, and require therefore shorter acquisition times. Different combinations of the sources types are discussed below:

a) Combination No 1: X-ray source (cw) plus de-excitation light source (cw)
The relation between the stimulated emission lifetime $\tau_{delp}$, the spontaneous emission lifetime $\tau_{em}$, the number of the luminescence centers de-excited via stimulated emission per unit of time $I_{depl}$, and the number of the luminescence centers de-excited via spontaneous emission per unit of time $I_{em}$ is:

$$\tau_{depl} = \frac{I_{em}}{I_{depl}} \tau_{em} \qquad (4)$$

$\tau_{delp}$ depends on the depletion light irradiance $I_{depl}$, the stimulated emission cross-section $\sigma_{depl}$, and the energy of the depletion light photon $E_{depl}$:

$$I_{depl} = \frac{E_{depl}}{\sigma_{depl}\tau_{depl}} \qquad (5)$$

For $Ce^{3+}$, $\sigma_{depl}$ are $10^{-17}...10^{-18}$ cm$^2$ , and $\tau_{em}$ are 15...100 ns. The irradiance required to de-excite half of the excited states is then $5 \cdot 10^6$ W/cm$^2$, which is achievable for a variety of commercially available cw-lasers focused with high NA microscope objectives. For 4f-4f rare-earth transitions, $\sigma_{depl}$ are $10^{-18}$ ...$10^{-21}$ cm$^2$, and $\tau_{em}$ are $10^5$...$10^7$ ns, which impose even lower requirements on the de-excitation laser power.

b) Combination No 2: X-ray source (cw) plus de-excitation light source (pulsed)
In this combination, the time-span between two consecutive depletion pulses should be much smaller than the spontaneous emission lifetime of the excited luminescence centers. Commercially available pulsed lasers can work at 80MHz repetition rate, i.e. with 12.5 ns period between two consecutive pulses. This time-span is much smaller than the lifetime of majority of 4f-4f and 5d-4f rare-earth radiative transitions. The time-averaged power requirement is the same as the power requirement for the cw lasers, which makes this combination also applicable.

c) Combination No 3: X-ray source (pulsed) plus de-excitation light source (cw)
>
Although pulsed X-ray excitation sources are less preferred since they have lower averaged over time X-ray flux, they can be also employed. The requirement for the cw laser power is the same as in Combination No 1.

d) Combination No 4: X-ray source (pulsed) plus de-excitation light source (pulsed)
In this combination, one can employ the 4f-4f emission transition for SSED with the same requirement as in Combination No 2, i.e. much higher de-excitation source pulse repetition rate than the spontaneous emission rate of the luminescence centers. One can also apply the excitation, the de-excitation pulses, and register the spontaneous emission in three consecutive steps. In this case, an additional requirement on the luminescence centers is imposed: the ESA cross-section should be much smaller than the stimulated emission cross-section.

## References

[1] A. Koch, C. Raven, P. Spanne, A. Snigirev, J. Opt. Soc. Am. A, 15 (1998) 1940-1951.
[2] M. Stampanoni, G. Borchert, P. Wyss, R. Abela, B. Patterson, S. Hunt, D. Vermeulen, P. Rüegsegger, Nucl. Instr. Meth. A, 491 (2002) 291-301.
[3] T. Martin, A. Koch, Journal of Synchrotron Radiation, 13 (2006) 180-194.
[4] S.W. Hell, J. Wichmann, Opt. Lett., 19 (1994) 780-782.
[5] S.W. Hell, Nat Biotech, 21 (2003) 1347-1355.

## Claims

1. An apparatus for high-resolution X-ray imaging, comprising:

a) an X-ray source (1) being enabled to emit X-rays (2) through a probe (3);
b) a module (5) to convert X-rays into light, preferably a luminescence screen (5);
c) a light source (8), preferably a laser, to perform stimulated scintillation emission depletion on the module (5) by emitting de-excitation light (10); and
d) a detector (15) to register spontaneous scintillation emission in the module (5).

2. A method for high resolution X-ray imaging, comprising the steps of:

a) converting X-rays passing through a sample into light;
b) applying de-excitation light (10) to a X-ray into light converter (5), preferably to a luminescence screen (5), which de-excites excited luminescence centers and which comprises a zero-intensity point in at least one focal area;

c) detecting spontaneous scintillation emission from the excited luminescent centers; thereby allowing the repetition of steps a) to c) at different positions of the focal area of the de-excitation light relative to the sample image in the X-ray into light converter (5), such as the luminescence screen (5); and

d) reconstructing two-dimensional images of one X-ray projection of the sample.

3. The method according to claim 2, wherein the de-excitation light (10) causes stimulated emission depletion of the excited luminescence centers in the X-ray to light converter (5).

4. The method according to claim 3, wherein the de-excitation light (10) causes stimulated emission depletion based on 5d-4f transitions of rare-earth luminescence centers.

5. The method according to claim 3 or 4, wherein the de-excitation light (10) causes stimulated emission depletion based on 4f-4f transitions of rare-earth luminescence centers.

6. The method according any of the preceding claims 3 to 5, wherein de-excitation light (10) causes stimulated emission depletion of alkali metal, transition metal, or post-transition metal luminescence centers.

7. The method according to any of claims 2 to 6, wherein the de-excitation light (10) causes excited state absorption of the luminescence centers.

8. The method according to any of the preceding claims 2 to 7, wherein the X-ray source (1) is pulsed or continuous wave.

9. The method according to any of the preceding claims 2 to 8, wherein the de-excitation light source (8) is pulsed or continuous wave.

10. The method according to any of the preceding claims 2 to 9, wherein the detector (15) is a single-pixel detector.

11. The method according to any of the preceding claims 2 to 9, wherein the detector (15) is a multi-pixel detector.

12. The method according to any of the preceding claims 2 to 1, further comprising a confocal pinhole (14) before the detector (15).

13. The method according to any of the preceding claims 2 to 12, further comprising an X-ray pinhole (4) before the X-ray to light converter (5).

14. The method according to any of the preceding claims 2 to 13, wherein the X-ray source (1) is a synchrotron or an X-ray tube (hot or cold), or a compact light source.

15. The method according to any of the preceding claims 2 to 14 allowing to measure multiple two-dimensional projections of the sample (3) at different angles and to reconstruct three-dimensional images from 2D images.

# FIG 1

# FIG 2

## FIG 3

FIG 4

Detector — 15

— 14

— 13

— 12

— 11

8

De-excitation
light source

9

10

7

6

5 4

3

2

X-ray
source — 1

## FIG 5A

## FIG 5B

Europäisches
Patentamt

European
Patent Office

Office européen
des brevets

## EUROPEAN SEARCH REPORT

**Application Number**

EP 15 17 0205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 006 709 A (SCHITEENHELM RUDOLF [DE]) 9 April 1991 (1991-04-09) * abstract * * figures 1, 2 * * column 2, lines 46-63 * * column 3, lines 16-22 * * column 3, lines 53-59 * * column 4, lines 4-15 * | 1 | INV. G01T1/20 |
| A,D | STAMPANONI M ET AL: "High resolution X-ray detector for synchrotron-based microtomography", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 491, no. 1-2, 21 September 2002 (2002-09-21), pages 291-301, XP004380432, ISSN: 0168-9002, DOI: 10.1016/S0168-9002(02)01167-1 * abstract * * figures 2, 3 * * section 1 * * section 2.2 * | 1-15 | |
| | | | TECHNICAL FIELDS SEARCHED (IPC) |
| | | | G01T |
| A,D | STEFAN W. HELL ET AL: "Breaking the diffraction resolution limit by stimulated emission: stimulated-emission-depletion fluorescence microscopy", OPTICS LETTERS, vol. 19, no. 11, 1 June 1994 (1994-06-01), page 780, XP055149725, ISSN: 0146-9592, DOI: 10.1364/OL.19.000780 * abstract * * figures 1, 2 * * page 780 * | 1-15 | |

The present search report has been drawn up for all claims

| Place of search | Date of completion of the search | Examiner |
|---|---|---|
| The Hague | 18 November 2015 | Santen, Nicole |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 15 17 0205

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2015

| Patent document cited in search report | | Publication date | Patent family member(s) | | Publication date |
|---|---|---|---|---|---|
| US 5006709 | A | 09-04-1991 | EP | 0279176 A1 | 24-08-1988 |
| | | | JP | S63156606 U | 14-10-1988 |
| | | | US | 5006709 A | 09-04-1991 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. KOCH ; C. RAVEN ; P. SPANNE ; A. SNIGIREV.** *J. Opt. Soc. Am. A,* 1998, vol. 15, 1940-1951
- **M. STAMPANONI ; G. BORCHERT ; P. WYSS ; R. ABELA ; B. PATTERSON ; S. HUNT ; D. VERMEULEN ; P. RÜEGSEGGER.** *Nucl. Instr. Meth. A,* 2002, vol. 491, 291-301
- **T. MARTIN ; A. KOCH.** *Journal of Synchrotron Radiation,* 2006, vol. 13, 180-194
- **S.W. HELL ; J. WICHMANN.** *Opt. Lett.,* 1994, vol. 19, 780-782
- **S.W. HELL.** *Nat Biotech,* vol. 21, 1347-1355